# EUROPEAN PATENT APPLICATION

(11) **EP 4 814 997 A1**
(43) Date of publication of application: **30.09.2026**
(21) Application number: 25202130.8
(22) Date of filing: 15.09.2025
(51) Int. Cl.: H01F 5/06, H01F 27/28, H01F 41/12, H02K 15/043, H02K 15/122

(54) **COIL AND METHOD OF MANUFACTURING COIL**

(30) Priority: 25.03.2025 KR 20250037862
(71) Applicant: Hyundai Motor Company, Seoul 06797 (KR); Kia Corporation, Seoul 06797 (KR)
(72) Inventor: AN, Jeong Uk, Hwaseong-si, Gyeonggi-do (KR); YEO, Kyung Ku, Hwaseong-si, Gyeonggi-do (KR); LEE, Kam Chun, Hwaseong-si, Gyeonggi-do (KR); LEE, Hong Wook, Hwaseong-si, Gyeonggi-do (KR); KIM, Chee Mann, Hwaseong-si, Gyeonggi-do (KR)
(74) Representative: Viering, Jentschura & Partner mbB Patent- und Rechtsanwälte

(57) **Abstract**

A coil is provided. The coil includes a winding member that is wound and stacked, and a fixing member installed on the stacked winding member to maintain stacking of the winding member.

## Description

### TECHNICAL FIELD

The present disclosure relates to a coil capable of securing electrical reliability of a device to which the coil is applied, such as a rotary machine, and a method of manufacturing the coil.

### BACKGROUND

A coil may be provided by insulation-coating a bare copper wire, such as a round wire or a flat wire with enamel or the like, and may be wound on a stator core to form a stator when a rotary machine is manufactured. For example, when the rotary machine is used as a motor, increasing a fill factor by winding more coils into slots of the stator core may reduce current density and DC resistance, which may lower heat generation, thereby improving output performance of the motor. Accordingly, a flat wire, may be used to achieve a high fill factor due to efficient use of space in the slot.

However, since the motor has a circular cross-section, there may still be a limitation in the fill factor even when a flat wire is used. To overcome this limitation, deformed coil technology, which involves varying a shape of the wire, has been considered. Insulation coating may be performed after molding, rather than using enamel coating.

In order to insulation-coat the (e.g., entire) deformed coil, electrodeposition insulation coating may be applied. In an electrodeposition insulation coating process, when a deformed coil is immersed in a tank filled with a coating liquid and a voltage is applied thereto, insulation coating components in the coating liquid may move and coat the deformed coil by electrochemical reaction. The deformed coil on which insulation coating is performed may be then removed from the tank and cured to complete the process.

However, during curing, the viscous coating liquid may flow downwards, resulting in a variation in coating thickness between upper and lower portions of the coil. In particular, an end turn of the coil, due to a curved shape thereof, may be unevenly coated, making it vulnerable to insulation.

### SUMMARY

An aspect of the present disclosure is to provide a coil capable of providing (e.g., securing) electrical reliability of a device to which the coil is applied, such as a rotary machine, and a method of manufacturing the coil.

According to an aspect of the present disclosure, there is provided a coil including a winding member that is wound and stacked, and a fixing member installed on the stacked winding member to maintain stacking of the winding member.

The fixing member may be formed of an insulating material.

The winding member may be wound to have a pair of straight line portions and a connection portion connecting the pair of straight line portions to each other. The straight line portion may be formed to be longer than the connection portion. A plurality of connection portions may be stacked by winding to form an end turn of the coil.

The fixing member may be formed in the form of a cap having an accommodation space, and may be fitted into the end turn.

One side of the fixing member may include at least one through-hole. A linear end of the winding member may be led out from the fixing member through the through-hole.

The fixing member may be formed in the form of tape wound on at least a portion of the wound and stacked winding member in an axial direction of the coil.

The fixing member may be formed in the form of band wound on at least a portion of the wound and stacked winding member in an axial direction of the coil.

The fixing member may be configured as a cable tie.

The winding member may be insulation-coated.

The coil may further include an insulating impregnation layer interposed between turns of the wound winding member.

The winding member may be a flat wire having a polygonal cross-sectional shape.

The winding member may have a cross-sectional shape or cross-sectional dimension gradually changing in a longitudinal direction of the winding member.

According to another aspect of the present disclosure, there is provided a method of manufacturing a coil. The method includes winding a winding member, insulation-coating the winding member, installing a fixing member on the winding member to maintain stacking of the winding member, and injecting or applying an insulating impregnation liquid into or to the winding member.

In the insulation-coating the winding member, an electrodeposition insulation coating method may be used.

The fixing member may be formed of an insulating material and formed in the form of a cap having an accommodation space. When the fixing member is installed on the winding member, the fixing member may be fitted into an end turn of the coil.

One side of the fixing member may include at least one through-hole. When the fixing member is installed on the winding member, a linear end of the winding member may be led out from the fixing member through the through-hole.

The fixing member may be formed in the form of tape or band of an insulating material. When the fixing member is installed on the winding member, the fixing member may be wound on at least a portion of the wound and stacked winding member in an axial direction of the coil.

When the insulating impregnation liquid is injected into the winding member, the insulating impregnation liquid may be trickled between turns of the wound winding member using a trickle nozzle.

As the insulating impregnation liquid is cured, an insulating impregnation layer may be formed between the turns of the wound winding member.

The winding member may have a polygonal cross-sectional shape, and may be molded such that the winding member has a cross-sectional shape or cross-sectional dimension gradually changing in a longitudinal direction of the winding member.

According to example embodiments of the present disclosure, a fixing member may be installed on both sides of a coil after electrodeposition insulation coating is performed, and an insulating impregnation liquid may be injected or applied and may then be cured, such that the coil may be fixed in a compressed state and insulation may be supplemented, thereby securing electrical reliability of a device to which the coil is applied.

### BRIEF DESCRIPTION OF DRAWINGS

The above and other aspects and features of the present disclosure will be understood from the following detailed description, taken in conjunction with the accompanying drawings, in which:
FIG. 1 illustrates a number of processes in a method of manufacturing a coil according to an example embodiment of the present disclosure;
FIG. 2 illustrates remaining processes in the coil and the manufacturing method according to an example embodiment of the present disclosure;
FIG. 3 is a schematic perspective view of a rotary machine to which a coil according to the present disclosure is applied;
FIG. 4 is a perspective view of a coil according to another example embodiment of the present disclosure; and
FIG. 5 is a perspective view of a coil according to still another example embodiment of the present disclosure.

### DETAILED DESCRIPTION

Hereinafter, the present disclosure will be described in detail with reference to exemplary drawings. In adding reference numerals to components of each drawing, it should be noted that the same components are indicated by the same numerals even though displayed on different drawings.

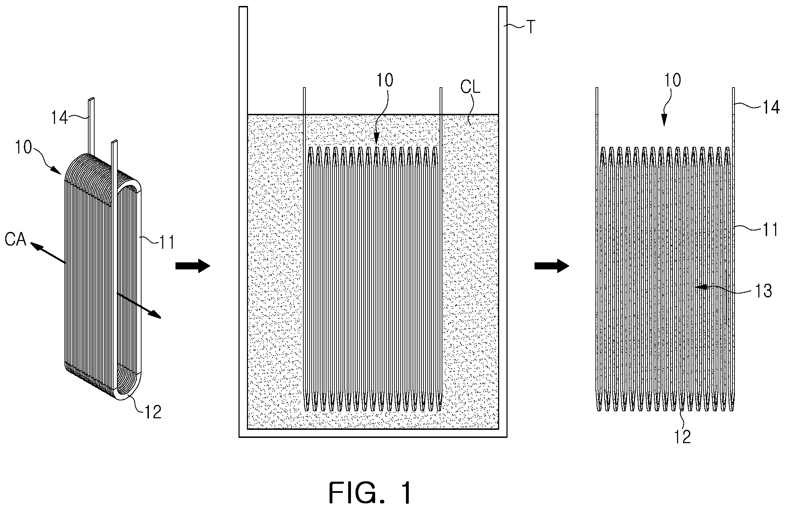

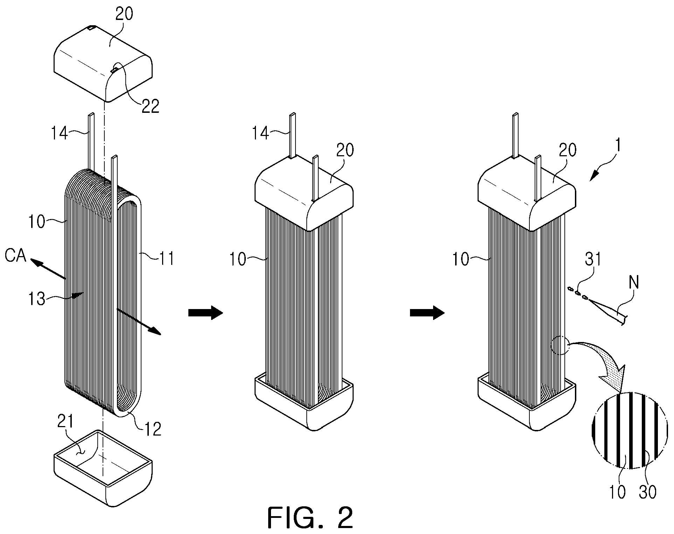

FIG. 1 illustrates a number of processes in a method of manufacturing a coil according to an example embodiment of the present disclosure, and FIG. 2 illustrates remaining processes in the coil and the manufacturing method according to an example embodiment of the present disclosure.

As illustrated in FIGS. 1 and 2, a coil 1 according to an example embodiment of the present disclosure may include a winding member 10 and a fixing member 20. Hereinafter, components of the coil according to the example embodiment of the present disclosure are described in conjunction with a description of a method of manufacturing the coil.

The method of manufacturing the coil according to the present disclosure may begin with preparing the winding member 10 formed of a metal wire having (e.g., excellent) electrical conductivity, such as a bare copper wire.

Selectively, the winding member 10 may be a deformed coil in which a flat wire having a polygonal cross-sectional shape, such as a rectangular shape, is formed by cutting the winding member in a thickness direction of the winding member. The flat wire may be used for a (e.g., high) fill factor.

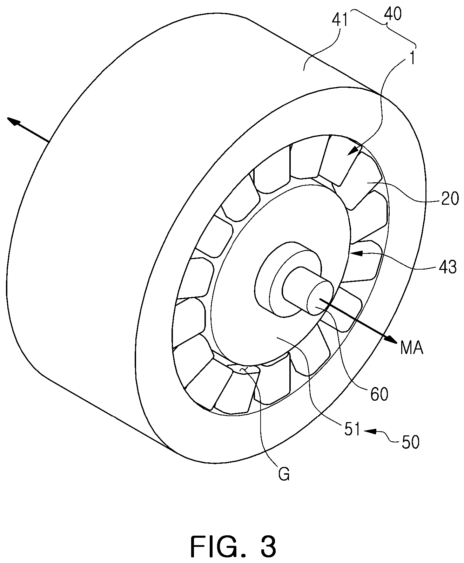

The fill factor may refer to a ratio, expressed as a percentage, of a cross-sectional area of the coil relative to a cross-sectional area of a slot of a stator core 41 (see FIG. 3) included in a rotary machine. A fill factor of a round wire, having a circular cross-sectional shape, may not reach even 50%.

Conversely, a fill factor of the flat wire may be at least 90% or more. When the rotary machine is used as a motor, increasing a fill factor in this manner may reduce current density and DC resistance, which may lower heat generation, thereby improving output performance of the motor.

The deformed coil in the form of a flat wire may have a cross-sectional shape or cross-sectional dimension gradually changing in a longitudinal direction of the winding member 10. Here, the longitudinal direction is the direction extending along the long side of the winding member, and the thickness direction refers to the direction perpendicularly intersecting the longitudinal direction.

The winding member 10 may be wound in the form of a coil, that is, in a spiral form.

For example, when the deformed coil is used as the winding member 10, the winding member may undergo a winding process after molding, or may be molded in a wound form.

In addition, the winding member 10 may be wound such that the winding member 10 has a pair of straight line portions 11 and a connection portion 12 connecting the straight line portions to each other. The straight line portions may be formed to be longer than the connection portion.

When the winding member 10 is wound, one turn of the wound winding member may have a pair of connection portions 12, and both sides of the connection portions may be stacked by winding to form an end turn of the coil 1.

For example, as illustrated in FIGS. 1 and 2, the winding member may be wound in an elliptical shape having a pair of straight line portions 11 and the connection portions 12 are curved, but the present disclosure is not limited thereto.

A single winding member 10 may be wound into a plurality of turns around an imaginary axis, and the turns of the winding member may be stacked in an axial direction of the axis. Here, the axial direction refers to the direction almost parallel to the thickness direction of the wound and stacked winding member. Hereinafter, this axial direction will be referred to as an axial direction CA of the coil 1.

Subsequently, the winding member 10, wound into the plurality of turns, may be insulation-coated.

Insulation coating may be a method of forming an insulation coating layer 13 to provide electrical isolation between adjacent turns of the wound winding member 10 or between the (e.g., entire) winding member and a surrounding structure thereof. The insulation coating layer 13 is configured to promote insulation. The insulation coating layer 13 may be formed on some or all surfaces of the winding member.

Insulation coating may be performed by immersing the winding member 10 in a coating liquid CL prepared by diluting, in water, a metal or resin paint having electrical conductivity significantly lower than that of the winding member 10, electrodepositing an insulation coating component on the winding member using an electrodeposition insulation coating method, taking the winding member out of the coating liquid, and then irradiating the winding member with heat and/or light to cure the winding member and/or the insulation coating.

Electrodeposition insulation coating may be a method of providing an insulation coating to a surface of a metal target to coat the metal target via an electrochemical reaction. This occurs by immersing the metal target in a tank T containing a coating liquid CL and allowing electricity (direct current) to flow between counter electrodes.

When the winding member 10 is formed of copper, a metal having electrical conductivity lower than that of copper, for example iron, nickel, chromium, tin, or alloys thereof, may be used for electrodeposition. Polyimide (PI), polyamideimide (PAI), epoxy-based resin, acrylic-based resin, or the like may be used as a resin for electrodeposition.

The wound winding member 10 may be immersed in the coating liquid CL in the tank T for electrodeposition insulation coating. In this case, when stacked turns are in close contact with each other, coating may not be performed. Thus, the wound winding member may be immersed in the coating liquid with a gap maintained between the turns of the wound winding member, and the wound and coated winding member may be cured in a state in which the gap between the turns is maintained. In addition, when heat is irradiated for curing, deformation may occur in the wound winding member.

In this case, the coil may be finally completed with the turns spread apart. When coupling or assembling coil 1 to or into a device such as a rotary machine, the coil may be compressed (e.g., again) in an axial direction CA of the coil and mounted. However, since the coil has elasticity, an assembly process may not be easily performed.

In addition, the viscous coating liquid CL may flow downward during curing of the coating, resulting in a variation in coating thickness between upper and lower portions of the wound winding member 10. In addition, the connection portion 12 of the winding member wound in an elliptical shape may have a curved shape, such that the insulation coating layer 13 may be formed unevenly at an end turn, that is, both sides of the connection portions of each turn, and the connection portion may be vulnerable to insulation.

To address such issues, the method of manufacturing the coil according to the present disclosure may include installing a fixing member 20 on a winding member 10 to maintain stacking of the winding member, and injecting or applying an insulating impregnation liquid into or to (e.g., on) the winding member.

In the coil 1 according to an example embodiment of the present disclosure, the fixing member 20 may be formed in the form of a cap having a hollow accommodation space 21.

For example, the fixing member 20 may be formed in a substantially hexahedral shape having the accommodation space 21 therein, and one (e.g., a first) side of the fixing member 20 may be open, so that the accommodation space may be in communication with the outside. As illustrated in FIG. 2, the closed surface opposite the open side of the fixing member may be formed as a curved surface, but the present disclosure is not limited thereto.

The fixing member 20 may be formed of an insulating material such as plastic, ceramic, or wood. In the case of plastic, the fixing member may be formed by injection molding using engineering plastics such as polyphenylene sulfide (PPS) or polyphthalamide (PPA).

Selectively, one side of the fixing member 20 may have at least one through-hole 22. Through the through-hole, a linear end 14 of the wound and stacked winding member 10 may extend outward (e.g., be led out) to the outside of the fixing member. The linear end may be electrically connected to a power source or a load, such that a current may be applied to the coil 1 from the power source or generated electricity may be supplied to the load.

In the coil 1 according to an example embodiment of the present disclosure, the fixing member 20, formed in the form of a cap, may be coupled to (e.g., fitted into) an end turn of the wound and stacked winding member 10 and installed in the end turn. A single fixing member may be fitted into each of the two (e.g., both sides of the) end turns, thereby maintaining and fixing stacking of the turns of the winding member in a compressed state. In addition, since the fixing member formed of an insulating material is installed on the end turn, (e.g., weak) insulation of the end turn may be supplemented.

The coil 1 according to an example embodiment of the present disclosure may further include an insulating impregnation layer 30 interposed between the turns of the wound winding member 10. The insulating impregnation layer may be formed by injecting or applying and curing an insulating impregnation liquid 31 between the turns of the wound winding member 10.

The insulating impregnation liquid 31 may be classified into an inorganic-based insulating impregnation liquid and an organic-based insulating impregnation liquid. The inorganic-based insulating impregnation liquid may be a water glass-based insulating impregnation liquid (for example, a sodium silicate solution) including silicate as a primary (e.g., main) component, and an acrylic resin, polyester resin, or epoxy resin may be used as the organic-based insulating impregnation liquid.

A curing agent may be blended into the insulating impregnation liquid 31, as necessary. A diluent, a filler, or other additives may also be selectively added to impart arbitrary properties.

The insulating impregnation liquid 31 may be injected between the turns of the winding member 10, which is wound, by trickling at a (e.g., relatively) low flow rate using, for example, a syringe-shaped trickle nozzle N.

Alternatively, the insulating impregnation liquid may be applied to an external surface and/or an internal surface of the wound and compressed winding member by an arbitrary application means such as a brush.

After the insulating impregnation liquid 31 is injected or applied, depending on an organic resin, the insulating impregnation liquid, together with the winding member 10, may be selectively heated to a predetermined curing temperature, and the curing temperature may be maintained for a predetermined period of time to allow complete curing of the resin.

The insulating impregnation liquid 31, together with the winding member 10, may be cooled to room temperature, and curing may be completed, thereby allowing the insulating impregnation layer 30 to be formed between the turns of the wound winding member.

The insulating impregnation layer 30 may enhance internal and external insulation of the coil 1, and also improve mechanical strength and fixation of the coil, and protect the coil against chemical and mechanical impacts, thereby improving the stability of the coil.

Accordingly, in the coil 1 according to an example embodiment of the present disclosure, insulation performance may be primarily provided by adding the insulation coating layer 13 through electrodeposition of the coating liquid CL, and the insulation performance may be secondarily supplemented by adding the insulating impregnation layer 30 through injection or applying of the insulating impregnation liquid 31.

As described herein, according to an example embodiment of the present disclosure, the fixing member 20 may be installed on both sides of the coil 1 after electrodeposition insulation coating is performed, and the insulating impregnation liquid 31 may be injected or applied and then cured, such that the coil may be fixed in a compressed state and insulation may be supplemented, thereby securing electrical reliability of a device to which the coil is applied.

FIG. 3 is a schematic perspective view of a rotary machine to which a coil according to the present disclosure is applied. The coil according to the present disclosure, as illustrated in FIG. 3, may be applied to a device such as a rotary machine.

A rotary machine may include a stator 40, a rotor 50, and a shaft 60.

The stator 40 may include a stator core 41 and a coil 1 of the present disclosure wound on the stator core. The shaft 60 is capable of passing through the stator, and the shaft 60 may be supported so as to be coupled (e.g., fixed) to a housing (not illustrated) of the rotary machine.

However, fixation and an arrangement relationship of the stator 40 is not limited to the above-described example. For example, the shaft 60 may be coupled (e.g., fixed), and the stator may be coupled (e.g., fixed) to an outer circumferential surface of the shaft.

The stator core 41 may be formed by stacking a plurality of stator core plates, formed by molding an electrical steel sheet into a predetermined shape, in an axial direction MA of the rotary machine. The stator core may include a rotor accommodation hole 43 formed to extend in the axial direction of the rotary machine, such that the rotor 50 may be accommodated in the center thereof.

In addition, the stator core 41 may further include a plurality of slots (not illustrated) and a plurality of poles (not illustrated) alternately formed around the rotor accommodation hole 43. The plurality of poles may be arranged at an equal interval in a circumferential direction of the stator core, and a slot may be formed between two adjacent poles.

The coil 1 of the present disclosure may be mounted around the poles from both sides of the slots, and a coil may be mounted for each pole to be included in the stator 40. FIG. 3 illustrates a fixing member 20 is provided in the coil.

The rotor 50 may include a rotor core 51 and a plurality of permanent magnets (not illustrated) inserted into the rotor core. The rotor may be coupled so as to be fixed to the outer circumferential surface of the shaft while the shaft 60 passes through the rotor, and may be accommodated in the rotor accommodation hole 43 of the stator 40 to rotate together with the shaft.

In this case, the shaft 60 may rotate together with the rotor 50, and may externally transmit rotational force of the rotor or externally receive rotational force of the rotor. In other words, when the rotary machine is a motor, torque may be transmitted through the shaft. When the rotary machine is a generator, voltage may be generated through the shaft.

However, an arrangement of the rotor 50 is not limited to the above-described example. For example, the stator 40 may be coupled so as to be fixed to the outer circumferential surface of the shaft 60, and the rotor may be arranged to surround the stator and rotate around the stator.

An air gap G may be present between the stator 40 and the rotor 50. In other words, the rotor may be disposed so as to be spaced apart from the stator by a predetermined distance such that the rotor faces the stator and rotates in one direction or in a reverse direction.

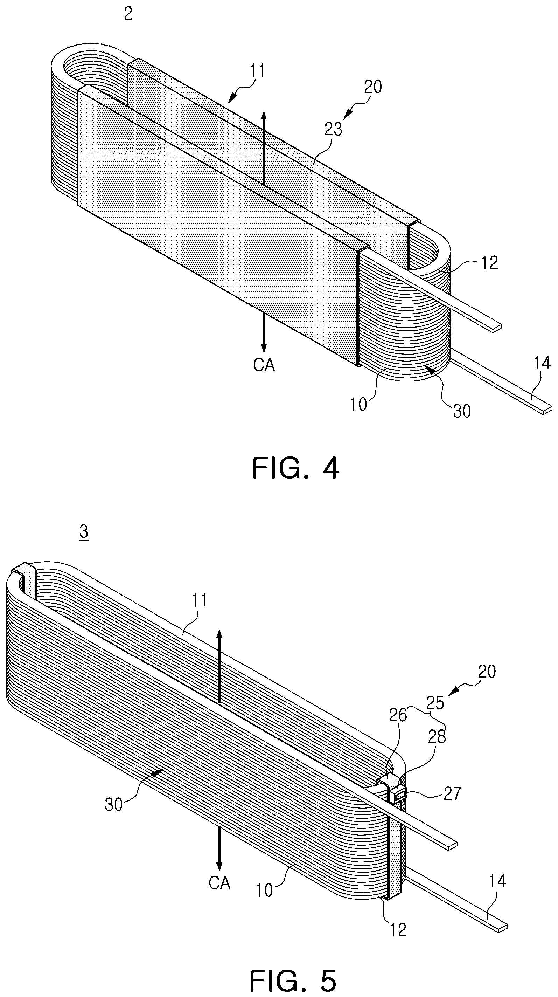

FIG. 4 is a perspective view of a coil according to another example embodiment of the present disclosure.

As illustrated in FIG. 4, a coil 2 according to an example embodiment of the present disclosure may include a winding member 10 and a fixing member 20.

Another example embodiment of the present disclosure illustrated in FIG. 4 differs from the example embodiment illustrated in FIG. 2, (e.g., only) in terms of a form of a fixing member 20, and may include remaining components of the example embodiment illustrated in FIG. 2. Accordingly, in describing the coil 2 according to another example embodiment of the present disclosure, the same reference numerals will be used for the same components as those of the above-described coil 1 of the example embodiment of FIG. 2, and detailed descriptions of the components and functions of the components may be omitted.

In the coil 2 according to an example embodiment of the present disclosure, the fixing member 20 may be formed in the form of tape wound in an axial direction CA of the coil on at least a straight line portion 11 of a winding member 10.

The fixing member 20 may include insulating tape 23 formed of an insulating material. The insulating tape may be formed of a polyethylene (PE) film or a polyethylene terephthalate (PET) film, or may be formed by adhering mica powder particles to a glass fiber.

In addition, in order to improve adhesiveness, a resin layer may be added to one surface of the insulating tape 23, or a resin may be impregnated in the form of a prepreg. To this end, for example, an epoxy resin may be used, but the present disclosure is not limited thereto. For example, when the epoxy resin is impregnated into the insulating tape, the fixing member 20 may also serve as an insulating portion with (e.g., high) reliability.

In the coil 2 according to an example embodiment of the present disclosure, the fixing member 20 including the insulating tape 23 may be wound on the straight line portion 11 of the wound and stacked winding member 10. However, the present disclosure is not limited thereto, and the fixing member may be wound on the (e.g., entire) wound and stacked winding member.

The fixing members 20, including the insulating tape 23, may be respectively wound on both sides of the straight line portions 11 of the winding member 10, thereby maintaining and fixing stacking of turns of the winding member in a compressed state.

The coil 2 according to an example embodiment of the present disclosure may further include an insulating impregnation layer 30 interposed between the turns of the wound winding member 10. The insulating impregnation layer may be formed by injecting or applying and curing an insulating impregnation liquid 31 (see FIG. 2) between the turns of the wound winding member.

The insulating impregnation layer 30 may enhance internal and external insulation of the coil 2, and also may improve mechanical strength and fixation of the coil, and may protect the coil from chemical and mechanical impacts, thereby enhancing stability of the coil.

Accordingly, in the coil 2 according to an example embodiment of the present disclosure, insulation performance may be primarily provided by addition of an insulation coating layer 13 (see FIG. 1) through electrodeposition of a coating liquid, and the insulation performance may be secondarily supplemented by addition of the insulating impregnation layer 30 through injection or applying of the insulating impregnation liquid 31.

As described herein, according to an example embodiment of the present disclosure, the fixing members 20 may be installed on both sides of the coil 2 after electrodeposition insulation coating is performed, and the insulating impregnation liquid 31 may be injected or applied and then cured, such that the coil may be fixed in a compressed state and insulation may be supplemented, thereby securing electrical reliability of a device to which the coil is applied.

FIG. 5 is a perspective view of a coil according to still another example embodiment of the present disclosure.

As illustrated in FIG. 5, a coil 3 according to an example embodiment of the present disclosure may include a winding member 10 and a fixing member 20.

Still another example embodiment of the present disclosure illustrated in FIG. 5 differs from the example embodiment illustrated in FIG. 2, (e.g., only) in terms of a form of a fixing member 20, and may include remaining components of the example embodiment illustrated in FIG. 2. Accordingly, in describing a coil 3 according to still another example embodiment of the present disclosure, the same reference numerals will be used for the same components as those of the above-described coil 1 of the example embodiment of FIG. 2, and detailed descriptions of the components and functions of the components may be omitted.

In the coil 3 according to an example embodiment of the present disclosure, a fixing member 20 may be formed in the form of a band wound in an axial direction CA of the coil on at least an end turn of a winding member 10.

The fixing member 20 may be configured as a cable tie 25, formed of an insulating material. The cable tie may be formed of polyamide (PA), polyethylene (PE), or polypropylene (PP).

The cable tie 25 may include a band portion 26 having a first (e.g., one) side surface on which a plurality of locking protrusions are formed at a predetermined (e.g., regular) interval along the length of the band portion; and a head portion 28 formed integrally with an end of the band portion. The head portion 28 has a front center having an insertion hole 27 through which a free end of the band portion 26 passes. The head portion 28 has a locking jaw allowing the locking protrusion to be fixed to the inside of the insertion hole.

In the coil 3 according to an example embodiment of the present disclosure, the fixing member 20, configured as the cable tie 25, may be wound and installed on an end turn of the wound and stacked winding member 10. However, the present disclosure is not limited thereto, and the fixing member 20 may be wound and installed on an arbitrary portion including a straight linear portion 11 of the wound and stacked winding member.

The fixing members 20, configured as the cable tie 25, may be respectively wound on both sides of the end turns of the winding member 10, thereby maintaining and fixing stacking of turns of the winding member in a compressed state.

The coil 3 according to an example embodiment of the present disclosure may further include an insulating impregnation layer 30 interposed between the turns of the wound winding member 10. The insulating impregnation layer may be formed by injecting or applying and curing an insulating impregnation liquid 31 (see FIG. 2) between the turns of the wound winding member.

The insulating impregnation layer 30 may enhance internal and external insulation of the coil 3, and also improve mechanical strength and fixation of the coil, and protect the coil from chemical and mechanical impacts, thereby enhancing stability of the coil.

Accordingly, in the coil 3 according to an example embodiment of the present disclosure, insulation performance may be primarily provided by addition of an insulation coating layer 13 (see FIG. 1) through electrodeposition of a coating liquid, and the insulation performance may be secondarily supplemented by addition of the insulating impregnation layer 30 through injection or applying of the insulating impregnation liquid 31.

As described above, according to an example embodiment of the present disclosure, the fixing members 20 may be installed on both sides of the coil 3 after electrodeposition insulation coating is performed, and the insulating impregnation liquid 31 may be injected or applied and then cured, such that the coil may be fixed in a compressed state and insulation may be supplemented, thereby securing electrical reliability of a device to which the coil is applied.

While example embodiments have been illustrated and described above, it will be apparent to those skilled in the art that modifications and variations could be made without departing from the scope of the present disclosure as defined by the appended claims.

For example, the above-described and illustrated example embodiments of the present disclosure may be combined with each other, and each embodiment may selectively further adopt or replace some components of another embodiment, as necessary.

For example, in a coil according to the present disclosure, fixing members that are in the form of caps may be fitted into and installed on both sides of the end turns of a winding member, respectively. In addition, an insulating tape or a cable tie may also be wound and installed on an arbitrary portion including both sides of the straight line portions of the winding member.

The example embodiments described herein are not to be limited. Therefore, the scope of the present disclosure is limited not by the detailed description. Other variations and their equivalents are included herein.

## Claims

1. A coil comprising:
a winding member configured to be wound and stacked; and
a fixing member installed on the stacked winding member to maintain stacking of the winding member.

2. The coil of claim 1, wherein the fixing member is formed of an insulating material.

3. The coil of claim 1 or 2, wherein
the winding member, when wound, includes a pair of straight line portions and a connection portion connecting the pair of straight line portions,
at least one of the straight line portions has a length longer than the connection portion, and
a plurality of connection portions are stacked to form an end turn of the coil.

4. The coil of claim 3, wherein the fixing member includes a cap including an accommodation space, wherein the cap is coupled to the end turn.

5. The coil of claim 3 or 4, wherein
a first side of the fixing member includes at least one through-hole, and
a linear end of the winding member extends outward from the fixing member through the at least one through-hole.

6. The coil of anyone of claims 1-5, wherein the fixing member is provided in the form of tape, wherein the tape is wound on at least a portion of the wound and stacked winding member in an axial direction of the coil.

7. The coil of anyone of claims 1-6, wherein the fixing member is provided in the form of a band, wherein the band is wound on at least a portion of the wound and stacked winding member in an axial direction of the coil.

8. The coil of claim 7, wherein the fixing member is a cable tie.

9. The coil of anyone of claims 1-8, wherein the winding member is coated with insulation.

10. The coil of anyone of claims 1-9, further comprising:
an insulating impregnation layer interposed between turns of the winding member, when the winding member is wound.

11. The coil of anyone of claims 1-10, wherein the winding member is a flat wire having a polygonal cross-sectional shape.

12. The coil of claim 11, wherein the winding member has a cross-sectional shape or cross-sectional dimension gradually changing in a longitudinal direction of the winding member.

13. A method of manufacturing a coil, the method comprising:
winding a winding member;
coating the winding member with insulation;
installing a fixing member on the winding member to maintain the winding member in a stacked position; and
injecting or applying an insulating impregnation liquid into or on the winding member.

14. The method of claim 13, wherein an electrodeposition insulation coating method is used to coat the winding member with the insulation.

15. The method of claim 13 or 14, wherein when the insulating impregnation liquid is injected into the winding member, the insulating impregnation liquid is trickled between turns of the winding member using a trickle nozzle.

## Amended claims

### Amended claims in accordance with Rule 137(2) EPC.

1. A coil (1, 2, 3) comprising:
a winding member (10) wound and stacked and having an insulation coating layer (13); and
a fixing member (20) installed on the stacked winding member (10) to maintain stacking of the winding member (10),
wherein the winding member (10) is a flat wire having a polygonal cross-sectional shape, and
the winding member (10) has a cross-sectional shape or cross-sectional dimension gradually changing in a longitudinal direction of the winding member (10).

2. The coil (1, 2, 3) of claim 1, wherein the fixing member (20) is formed of an insulating material.

3. The coil (1, 2, 3) of claim 1 or 2, wherein
the winding member (10), when wound, includes a pair of straight line portions (11) and a connection portion (12) connecting the pair of straight line portions (11),
at least one of the straight line portions (11) has a length longer than the connection portion (12), and
a plurality of connection portions (12) are stacked to form an end portion of the coil (1, 2, 3).

4. The coil (1) of claim 3, wherein the fixing member (20) includes a cap including an accommodation space (21), wherein the cap is coupled to the end portion.

5. The coil (1) of claim 3 or 4, wherein
a first side of the fixing member (20) includes at least one through-hole (22), and
a linear end (14) of the winding member (10) extends outward from the fixing member (20) through the at least one through-hole (22).

6. The coil (2) of anyone of claims 1-5, wherein the fixing member (20) is provided in the form of tape (23), wherein the tape (23) is wound on at least a portion of the wound and stacked winding member (10) in an axial direction of the coil (2).

7. The coil (3) of anyone of claims 1-6, wherein the fixing member (20) is provided in the form of a band, wherein the band is wound on at least a portion of the wound and stacked winding member (10) in an axial direction of the coil (3).

8. The coil (3) of claim 7, wherein the fixing member (20) is a cable tie (25).

9. The coil (1, 2, 3) of anyone of claims 1-8, wherein the insulation coating layer (13) is formed by an electrodeposition insulation coating method.

10. The coil (1, 2, 3) of anyone of claims 1-9, further comprising:
an insulating impregnation layer (30) interposed between turns of the winding member (10), when the winding member (10) is wound.

11. A method of manufacturing a coil (1, 2, 3), the method comprising:
winding a winding member (10); and
installing a fixing member (20) on the winding member (10) to maintain the winding member (10) in a stacked position,
wherein the method further comprises forming an insulating coating layer (13) on the winding member (10) by an electrodeposition insulation coating method.

12. The method of claim 11, further comprising: injecting or applying an insulating impregnation liquid (31) into or on the winding member (10), and
wherein when the insulating impregnation liquid (31) is injected into the winding member (10), the insulating impregnation liquid (31) is trickled between turns of the winding member (10) using a trickle nozzle.
